# EUROPEAN PATENT APPLICATION

(11) **EP 2 551 109 A1**
(43) Date of publication of application: **30.01.2013**
(21) Application number: 11175131.9
(22) Date of filing: 25.07.2011
(51) Int. Cl.: B32B 27/32, F16L 55/165

(54) **Pipe lining with heterophasic polyolefin compositions and thermosetting resin**

(71) Applicant: Basell Poliolefine Italia S.r.l., 20127 Milano (IT)
(72) Inventor: Lunghi, Luca, 44123 Ferrara (IT)
(74) Representative: Colucci, Giuseppe

(57) **Abstract**

Liner for CIPP rehabilitation comprising a layer of thermoplastic polymer material, a resin absorbent layer, thermosetting hot curing-resin impregnating the absorbent layer;wherein said thermoplastic is a heterophasic polyolefin composition (I) having flexural modulus equal to or lower than 200 MPa, and comprising a crystalline propylene homopolymer(a); and a copolymer or a composition of copolymers of ethylene with other alpha-olefins (b) containing from 15% by weight to less than 40% by weight of ethylene.

## Description

The present invention relates to liners for lining pipes, particularly but not limited to large diameter pipes, e.g sewer. Particularly it is directed to liners for pipe rehabilitation with cure-in-place pipe lining (CIPP) technologies.

Thermosetting resins have been applied in the art to pipes rehabilitation for example using a lining pig which is also forced through the pipe by compressed air. A major drawback is the long curing time required - up to sixteen hours - which adds considerably to the down-time.

In WO 97/04269 a CIPP method for lining pipes is disclosed in which a tube of film material is attached at one end of the pipe and everted by fluid pressure through the pipe.

Similar methods have been employed for a number of years in the structural rehabilitation of sewers. The lining used in that procedure, is typically a heavy-duty thermo setting resin impregnated textile, e.g. polyester fibre felt. In WO 97/04269 a lining method is disclosed wherein the liner to be everted is a film tube, for example, a polyethylene lay flat film tube, which can be unwound from a roll to be fed with the pipe.

Polyethylene and polyethylene terephthalate are suitable, especially for lining water and gas pipes with thicknesses between about 40 and 400 microns. An adhesive layer can be added (on the inside of the extruded tube) for activation once in the pipe, as by heat from a hot water, air or steam flow through the pipe, to adhere the lining to the pipe wall.

In US 2005194718 a liner is disclosed to be used for CIPP pipe rehabilitation through the eversion technique above or the alternative drug in technique. The liner comprises a resin absorbent material (e.g felt) and a substantially impermeable coating including a modified polymer with reduced dynamic coefficient of friction in order to reduce friction arising in the everting or drug in lining process. The substantially impermeable coating is between 1 and 2500 microns thick and the polymer is selected from synthetic or natural polymer, for example polyethylene, and polypropylene. The resin absorbent material may comprise a non-woven polyester needlefelt material and the resin absorbent material of the liner is impregnated with a settable or curable resin, i.e. a thermosetting resin. Preferably a low exothermic resin is used, i.e. one which releases little heat upon curing.

It is still felt the need of improved liners materials for pipe rehabilitation providing high performance that is mechanical resistance and fast curing in addition to impermeability of the polymer film coating. Impermeability is requested to prevent both leakage out of the pipe through the holes and cracks to be remedied, and to prevent unwanted infiltration into the pipe due to migration of the thermosetting resin components or of other contaminants from the environment. The polymer materials and the other layers of the liner are requested also to provide resistance to fast curing conditions (higher temperatures) without deterioration of the coating membrane appearance and resistance. Typically with polyethylene based liners the temperature control is a critical parameter, namely delamination, wrinkles, bubbles, holes or other damages in the membrane coating are unwanted drawbacks drawing to select low exothermic resins (mild curing) for CIPP methods of the state of the art.

The present invention is directed to a selection of materials for CIPP rehabilitation overcoming the drawbacks of the state of the art.

A first object of the present invention is a liner for CIPP rehabilitation comprising:
- a layer of thermoplastic polymer material;
- a resin absorbent layer;
- thermosetting hot curing-resin impregnating the absorbent layer;
wherein said thermoplastic is a heterophasic polyolefin composition (I) having flexural modulus equal to or lower than 200 MPa, preferably of from 80 to 180 MPa even more preferably equal to or lower than 150 MPa, comprising:
(a) a crystalline propylene homopolymer; and
(b) a copolymer or a composition of copolymers of ethylene with other alpha-olefins containing from 15% by weight to less than 40% by weight of ethylene, preferably from 15% to 38%, more preferably from 15 to 35%, in particular from 20 to 38 and more particularly from 20 to 35% by weight of ethylene.

In particular, the said alpha-olefins are selected from C₃-C₁₀ alpha-olefins.

Examples of the above mentioned C₃-C₁₀ alpha-olefins suitable as comonomers in component (b) are propylene, butene-1, pentene-1, 4-methylpentene, hexene-1, octene-1. Preferred comonomers in the ethylene copolymers of component (b) are propylene and/or butene-1. The most preferred comonomer is propylene.

Preferred are the heterophasic compositions (I) comprising (weight percentages):
1) 5-40%, preferably 20-30%, of a propylene homopolymer (component a) insoluble in xylene at ambient temperature in an amount of more than 90%.
2) 60-95%, preferably 70-80%, of an elastomeric fraction (component b) consisting of one or more copolymer(s) of ethylene said copolymer(s) containing up to 40% of ethylene, preferably from 15% to 38%, more preferably from 15 to 35%, in particular from 20 to 38 and more particularly from 20 to 35% by weight of ethylene; and being soluble in xylene at ambient temperature in an amount of more that 70%

Particularly preferred are the heterophasic compositions (I) comprising (weight percentages):
1) 5-40% of component (a) as defined above;
2) 60-95% of a component (b1) consisting of one or more copolymer(s) of ethylene with propylene and/or C₄-C₁₀ alpha-olefin(s) said copolymer(s) containing from 15 to 40% of ethylene, and being a fraction soluble in xylene at ambient temperature ; and
3) 0-30%, with respect to the sum of component (a) and component (b 1), of a copolymer component (b2) containing ethylene, said component being a fraction insoluble in xylene at ambient temperature.

Examples of the above mentioned C₄-C₁₀alpha-olefins are butene-1, pentene-1, 4-methylpentene, hexene-1, octene-1. Preferred comonomer is propylene.

The solubility and insolubility of the said polymer components and fractions are defined as fractions soluble or insoluble in xylene at ambient temperature, i. e., around 25°C.

When present, said component (b 2) preferably exceeds 1% by weight, more preferably ranging from 1 to 25% by weight with respect to the sum of component (a) and component (b 1).

Preferably the percent by weight of the sum of (b 1) and (b 2) components with respect to the weight of the heterophasic polyolefin composition (I) is of from 50% to 90% and the (b 2)/(b 1) weight ratio is lower than 0.4. The content of ethylene in component (b 2) is preferably at least 75% by weight, more preferably at least 80% by weight, with respect to the total weight of component (b 2). The comonomers in the copolymer component (b 2) are preferably the same as those of the copolymer component (b 1). An example of copolymer component (b 2) is an essentially linear semicrystalline copolymer of ethylene with propylene, a specific example of which is linear low density polyethylene (LLDPE).

The said heterophasic compositions can be prepared by blending component (a) and (b), or component (a) and component (b 1), and optionally component (b 2) in the molten state, that is to say at temperatures greater than their softening or melting point, or more preferably by sequential polymerization in the presence of a highly stereospecific Ziegler-Natta catalyst. In particular, the catalyst system used comprises (i) a solid catalytic component containing a titanium compound and an electron-donor compound, both supported on magnesium chloride, and (ii) an Al trialkyl compound and optionally an electron-donor compound.

Other catalysts that may be used are metallocene-type catalysts, as described in USP 5,324,800 and EP-A-0 129 368; particularly advantageous are bridged bis-indenyl metallocenes, for instance as described in USP 5,145,819 and EP-A-0 485 823.

These metallocene catalysts may be used in particular to produce the component (b).

The above mentioned sequential polymerization process for the production of the heterophasic composition (I) comprises at least two stages, where in one or more stage(s) propylene is polymerized, optionally in the presence of the said comonomer(s), to form component (a), and in one or more additional stage(s) mixtures of ethylene with said C₃-C₁₀alpha-olefin(s), are polymerized to form component (b).

The polymerization processes are carried out in liquid, gaseous, or liquid/gas phase. The reaction temperature in the various stages of polymerization can be equal or different, and generally ranges from 40 to 90°C, preferably from 50 to 80°C for the production of component (a), and from 40 to 60°C for the production of component (b).

Examples of sequential polymerization processes are described in European patent application EP-A-472946.

As a way of example, the heterophasic composition (I) has MFR values ranging from 0.1 to 20 g/10 min, preferably from 0.2 to 15 g/10 min. The heterophasic composition with said melt flow rate values can be obtained directly during the polymerization process; as an alternative, said heterophasic composition can be subjected to a chemical visbreaking process carried out in the presence of the appropriate visbreaking agents, such as peroxides. Said chemical visbreaking process is carried out according to well known methods.

Typically, the total content of polymerized ethylene in the heterophasic composition (I) ranges from 15 to 35% by weight, in particular from 15 to 30% by weight.

The molecular weight of the various components of the heterophasic composition (I) (determined by measuring the intrinsic viscosity in tetrahydronaphtalene at 135°C) vary in function of the nature of the components, and the total melt flow rate of the composition. In particular, the intrinsic viscosity is preferably comprised between the following limits: 0.5-3 dl/g, preferably from 1 e 1,5dl/g, for component (a), and 2-8 dl/g for component (b) or (b1) and (b2) when present. Typically the composition (I) exhibit low hardness (shore D - ISO 868) of equal to or less than 50, preferably lower than 40 even more preferably lower than 28.

Particularly preferred are the heterophasic compositions (I) having a peak melting temperature Tm (DSC - ISO 11357-3) of equal to or higher than 150°C, more preferably equal to or higher than 160°C. Even more preferred are those compositions (I) having relatively low Vicat softening temperature (Tvicat) measured according to ISO 306 - (A50 (50°C/h ION)). Preferably Tvicat is equal to or lower than 60°C. Particularly preferred are the heterophasic compositions (I) having Tm and Tv_{icat} values satisfying the following equation: Tm - Tvicat ≥ 100°C.

The liner of the present invention preferably has a non-woven fabric material (felt) as a resin absorbent layer. Typically polyester granules are processed into high tenacity yarns using a dedicated spinning mill. Yarns are transformed to generate a non-woven polyester fabric which is rot-proof and very strong. A suitable commercial felt is produced by SIOEN Industrial Application and sold under the trade name Siopipe C.

The thermosetting hot curing-resin suitable for the present invention is typically a polyester resin formulated for hot curing around 80 - 85°C.

The following examples are illustrative not limiting the present invention. The following analytical methods have been used to determine the properties reported in the present invention.

### Property Method

Melt Flow Rate (MFR) ISO1133, at 230°C, 2.16 kg where not differently specified
Shore A Hardness (Sh.A) and ShoreD (Sh.D): measured on a compression moulded plaques (thickness of 4mm) following the ISO 868.
DSC - thermal properties: The peak melting temperature Tm was measured following ISO 11357-3, via DSC performed at 10°C/min where not differently specified.
Flexural Elastic Modulus (MEF) ISO 178 on 1mm thick compression moulded plaque.
Comonomer content (%wt) IR. Spectroscopy
Xylene soluble and insoluble fractions (%wt): determined as follows: 2.5 g of polymer composition and 250 cm³ of O-xylene are introduced in a glass flask equipped with a refrigerator and a magnetical stirrer. The temperature is raised in 30 minutes up to the boiling point of the solvent. The so obtained clear solution is then kept under reflux and stirring for further 30 minutes. The closed flask is then cooled to 100°C in air for 10 to 15 minute under stirring and then kept for 30 minutes in thermostatic water bath at 25 °C for 30 minutes as well . The so formed solid is filtered on quick filtering paper. 100 cm³ of the filtered liquid is poured in a previously weighed aluminum container which is heated on a heating plate under nitrogen flow, to remove the solvent by evaporation. The container is then kept in an oven at 80 °C under vacuum until constant weight is obtained. The weight percentage of polymer soluble in xylene (XS) at room temperature (25°C) is then calculated.

### Products Used in Working Examples

- HPOl:: Heterophasic polyolefin composition having MFR 0.8 g/10min, Flexural modulus 100 MPa, Shore D Hardness (Sh.D) 28, Tm = 160°C; Tvicat = 57°C and comprising
- 24 %wt. of a crystalline propylene homopolymer (component a), having MFR 25 g/10min, soluble fraction in xylene at 25°C of 3%wt, and
- 76 %wt. of an elastomeric fraction (component b) of propylene with ethylene having 28 % by weight of units derived from ethylene, 89%wt of fraction soluble in xylene at 25°C.
- HPO2:: Heterophasic polyolefin composition having MFR 0.6 g/10min, Flexural modulus 80 MPa, Shore D Hardness (Sh.D) 30, Tm 142°C, Tvicat 60°C and comprising
- 31 %wt. of a crystalline copolymer of propylene with 3.3 %wt. of units derived from ethylene (comonomer content), having MFR 25 g/10min, soluble fraction in xylene at 25°C of 6%wt, and
- 69 %wt. of an elastomeric fraction of propylene with ethylene having 27 % by weight of units derived from ethylene, 89%wt of fraction soluble in xylene at 25°C.
- LDPE :: low density polyethylene commercialized by Lyondellbasell under the tradename Lupolen 1800H, density 0.919 g/cm³ (ISO 1183), MFR 1.5 dg/min (190°C/2.16Kg), Flexural modulus 180 Mpa, Tm (ISO 3146) of 108°C and Tvicat of 88°C.
- Felt support:: commercial felt produced by SIOEN Industrial Application sold under the tradename Siopipe C -selected to couple to the membrane obtained from the thermoplastic compositions.

Thermosetting resins used to impregnate the felt:
- Polyester resin 1(hot curing resin): a isophthalic neopentylglycol unsaturated polyester resin marketed by Resintex Technology S.r.l. under the tradename CRYSTIC 4044T V01, with 0.8% Perkadox 16 + 1% Trigonox C, having reactivity at 80°C with a time to peak of 7 - 8 min and a peak temperature of 250° C.
- Polyester resin 2 (mild curing resin): orthophthalic polyester resin solved in styrene marketed by Leda Industrie srl under the tradename R.601/T formulated with 2% Methyl ethyl ketone peroxide (MEKP) 50% (catalyst) for curing at 25 °C, having an exotherm curve defined by a gel time 10 min, peak temperature 160 °C and time to peak temperature 23 min.

### Preparation of the coated membranes:

Membrane samples having nominal thickness of 0.4 mm have been manufactured, starting by the polymer granules, on a Brabender 30 mm equipped with a flat die (150 mm) and a calendaring stack, under the following conditions:
- throughput 6-8 Kg/h
- rotation speed 150 rpm
- melt temperature 245°C for polypropylene based materials
- head pressure 40 bar for polypropylene based materials
- melt temperature 205°C for polyethylene based material
- head pressure 38 bar for polyethylene based materials

A layer of felt has been laminated on the bottom layer during the calendaring of the membranes.

### Preparation of the liner:

The external edges of two membranes samples have been welded with a Leister Comet hot wedge welding machine, at a welding temperature of 300°C and a welding speed of 2,5 m/min, in order to realize a pipe 400 mm long and 95 mm of diameter. Pipes have been reversed in order to have the felt as external layer.

The felt on the external layer has been impregnated with the resin and the liner put inside a steel made pipe 100 mm of internal diameter and 0.5 mm of pipe wall thickness.

A series of holes of 5, 10, 15 mm diameter, were made in order to replicate the failure in the real application. The holes were made on the steel pipe along its middle circumference (situated at half pipe length at about 200mm from the pipe sides).

The steel made pipe has been equipped with two removal caps on the sides. One cap has been equipped with a connection for the addition of water, the other cap has been equipped with a connection for the extraction of water.

Once the removal caps have been closed, a flow of water has been given inside the device to start the curing in place process.

Water parameters of the curing in place:
Temperature: ramp of 4°C/min from 60°C to 100°C and 100°C for 20 minutes Pressure: 1 bar

At the end of the cycle the water has been extracted by a flow of nitrogen.

The device has been opened after 6 hours of the cycle completion in order to ensure the termination of the self curing of the resin.

Visual inspection has been done in order to assess the status of the membrane and the quality of the reparation.

Membrane sample liners were prepared as above described and used for pipe lining according to the following list of coupled materials

### Examples 1-2:

Example 1: HPO1 + Polyester resin 1 impregnating felt
Example 2: HPO1 + Polyester resin 2 impregnating felt

### Comparative examples 1-3:

Comparative example 1c: HPO2 + Polyester resin 1 impregnating felt
Comparative example 2c: HPO2 + Polyester resin 2 impregnating felt
Comparative example 3c: LDPE + Polyester resin 1 impregnating felt

**Table 1 - evaluation of the membrane liners after curing.**

| **Examples** | **1** | **2** | **1c** | **2c** | **3c** |
|---|---|---|---|---|---|
| **Polymer layer material** | HECO1 | | HECO2 | | LDPE |
| **Thermosetting resin impregnating felt** | polyester resin 1 | polyester resin 2 | polyester resin 1 | polyester resin 2 | polyester resin 1 |
| **Evaluation*** | | | | | |
| **Membrane inspection** | OK | OK | Damaged | OK | Collapsed |
| **Leakage (leaking hole - mm)** | NO | NO | YES (15) | NO | YES (5) |
| **Passed** | YES | YES | NO | YES | NO |

| | | | | | |
|---|---|---|---|---|---|
| * Membrane inspection evaluation | | | | | |

- OK: no signs of damage, no wrinkles, no signs of delamination, no bubbles or holes in the membrane.
- Damaged: wrinkles or bubbles present on the surface of the membrane.
- Collapsed: membrane with delamination or where felt is visible on the surface of the membrane.
- Leakage: when YES minimum diameter of the hole of the steel made pipe with evidence of leakage of the membrane is reported.

From the results of the visual inspection it is evident that:
LDPE, low density polyethylene, samples failed with the hot curing resin impregnating the felt.
HECO2, random-copolymer matrix heterophasic polypropylene composition, with mild curing resin sample passed, with hot curing resin sample failed.
HECO1, homo matrix heterophasic polypropylene composition according to the invention, passed both with mild curing and with hot curing.

## Claims

1. Liner for CIPP rehabilitation comprising:
- a layer of thermoplastic polymer material;
- a resin absorbent layer;
- a thermosetting hot curing resin impregnating the absorbent layer;
wherein said thermoplastic is a heterophasic polyolefin composition (I) having flexural modulus equal to or lower than 200 MPa, comprising:
(a) a crystalline propylene homopolymer; and
(b) a copolymer or a composition of copolymers of ethylene with at least one other C₃-C₁₀alpha-olefin, containing from 15% by weight to less than 40% by weight of ethylene.

2. A liner according to claim 1 wherein the heterophasic compositions (I) is comprising:
1) 5-40% by weight of a propylene homopolymer component (a), insoluble in xylene at ambient temperature in an amount of more than 90%.
2) 60-95% by weight of an elastomeric component (b) consisting of one or more copolymer(s) of ethylene said copolymer(s) containing from 15% to 40% by weight of ethylene; and being soluble in xylene at ambient temperature in an amount of more that 70%.

3. A liner according to claim 1 wherein the heterophasic compositions (I) is comprising:
1) 5-40% by weight of a propylene homopolymer component (a), insoluble in xylene at ambient temperature in an amount of more than 90%.
2) 60-95% by weight of a component (b1) consisting of one or more copolymer(s) of ethylene with propylene and/or C₄-C₁₀ alpha-olefin(s) said copolymer(s) containing from 15 to 40% of ethylene, and being soluble in xylene at ambient temperature; and
3) 0-30%, with respect to the sum of component (a) and (b 1), of a copolymer component (b2) containing ethylene, said component being insoluble in xylene at ambient temperature.

4. A liner according to anyone of claims 1-3 wherein the said alpha-olefin is propylene.

5. A liner according to anyone of the previous claims wherein the composition (I) has a peak melting temperature Tm (DSC - ISO 11357-3) of equal to or higher than 150°C.

6. A liner according to of the previous claims wherein the composition (I) has Vicat softening temperature (Tvicat) measured according to ISO 306 equal to or lower than 70°C.

7. A liner according to of the previous claims wherein the composition (I) has Tm and TVicat values satisfying the following equation: Tm - Tvicat ≥ 100° C.

8. A liner according to anyone of the previous claims wherein the resin absorbent layer is a non-woven polyester fabric.

9. A liner according to anyone of the previous claims wherein the thermosetting hot curing resin is a polyester resin formulated for hot curing.
